# EUROPEAN PATENT APPLICATION

(11) **EP 2 179 854 A1**
(43) Date of publication of application: **28.04.2010**
(21) Application number: 09003675.7
(22) Date of filing: 13.03.2009
(51) Int. Cl.: B41J 11/00, G01N 21/64

(54) **Fluorescent reference member and fluorescent detection device including fluorescent reference member**

(30) Priority: 27.10.2008 JP 2008275565
(71) Applicant: Kabushiki Kaisha Toshiba, Minato-ku, Tokyo 105-8001 (JP)
(72) Inventor: Nomura, Hiroshi, Tokyo 105-8001 (JP)
(74) Representative: HOFFMANN EITLE

(57) **Abstract**

A fluorescent reference member capable of providing a detection reference with high reliability and a fluorescent detection device (1) including the fluorescent reference member is provided. The fluorescent reference member (6) includes a fluorescent reference plate (61) having an irradiation surface on which a fluorescent ink contained in a fluorescent material emitting fluorescence upon receipt of irradiation of exciting light is applied and which is irradiated with the exciting light.

## Description

The present invention relates to a fluorescent reference member which emits fluorescence in response to irradiated exciting light and a fluorescent detection device including the fluorescent reference member.

In the past, a fluorescent detection device which irradiates a medium such as a sheet with ultraviolet irradiation and detects fluorescence emitted from a surface of the sheet has been provided. Such a fluorescent detection device is included in a sheet processing device for determining a kind of sheet, for example.

The fluorescent detection device is arranged in a conveyor path through which a sheet is conveyed. The fluorescent detection device comprises a fluorescent sensor including a luminescent element and a light receiving element and a fluorescent glass. The fluorescent glass is a fluorescent reference member which emits fluorescence used as a detection reference by the fluorescent sensor. The fluorescent sensor and the fluorescent glass are provided opposite to each other interposing the carrier path of the sheet processing device in between. The fluorescent detection device detects fluorescence from the fluorescent glass in a state where a sheet is not being conveyed. The fluorescent detection device compensates for a luminescent amount of the luminescent element or sensitivity of the light receiving element based on the value of the detected fluorescence.

There is a case, however, where the luminescent amount of fluorescent emitted by the fluorescent glass changes due to dust or flaws on the surface of the fluorescent glass, for example. In this case, a problem exists in that a stable luminescent amount cannot be obtained.

In the fluorescent examination device disclosed in Jpn. Pat. Appln. KOKAI Publication No. 2007-64828, a light absorbing member is arranged on a surface other than a luminescent surface of a fluorescent glass.

The fluorescent reference member used in the above-described fluorescent examination device is configured such that the light absorbing member prevents surfaces other than the luminescent surface from being irradiated with exciting light (ultraviolet radiation). Thereby, the fluorescent reference member decreases reflection caused by disturbance light in a metal member holding the fluorescent glass.

The light absorbing member, however, becomes discolored by continuous reception of ultraviolet radiation. This generates the possibility that the amount and spectral characteristics of light emitted by the fluorescent reference member may change. This causes a problem that the fluorescent detection device cannot compensate for the luminescent amount of the fluorescent element or sensitivity of the light receiving element stably.

Further, the conventional fluorescent detection device using a conventional fluorescent glass uses an adhering member for fixing the fluorescent glass to a fluorescent reference member. Since the adhering agent becomes discolored by continuous reception of ultraviolet rays, the light emitted by the fluorescent reference member changes. This results in a problem that the fluorescent detection device cannot compensate for the luminescent amount of the luminescent element or sensitivity of the light receiving element stably.

Moreover, the fluorescent detection device using a conventional fluorescent glass needs to set fluorescence emitted by the fluorescent glass and fluorescence emitted by a fluorescent material applied on a surface of a sheet at close levels. Since only limited kinds of fluorescent glass are available, however, the fluorescent reference member includes a transmissive light amount restrictive member for restricting the amount of transmitting light. This involves a problem that the size of the fluorescent reference member increases.

Moreover, when the operation is started with the fluorescent glass provided in the device, it is known that the luminescent amount is temporarily decreased by a little amount due to the ultraviolet rays. For that reason, another problem that the fluorescent detection device using a fluorescent glass requires an aging process of irradiating the fluorescent glass with ultraviolet radiation for several hours in advance.

It is therefore an object of the present invention to provide a fluorescent reference member capable of providing a highly reliable detection reference and a fluorescent detection device including the fluorescent reference member.

An embodiment of the present invention relates to a fluorescent reference member comprising a fluorescent reference plate, a fluoresecent ink containing a fluorescent material which emits fluorescence upon receipt of irradiation of exciting light being applied on an irradiation surface of the fluorescent reference plate irradiated with the exciting light.

Another embodiment of the presnet invention relates to a fluorescent detection device comprising a light source which irradiates a medium to be detected with exciting light, a fluorescent reference member including a fluorescent reference plate, a fluorescent ink containing a fluorescent material which emits fluorescence upon receipt of irradiation of exciting light is applied on an irradiation surface of the fluorescent reference plate irradiated with the exciting light, a light receiving means for receiving fluorescence emitted by the fluorescent reference member, a compensation means for compensating for sensitivity of the light receiving means based on the fluorescence received by the light receiving means, and a detection means for detecting the fluorescence emitted by the fluorescent material contained in the medium to be detected by means of the light receiving means, the sensitivity of the light receiving means having been compensated for by the compensation means.

According to an embodiment of the present invention, it is possible to provide a fluorescent reference member capable of providing a highly reliable detection reference and a fluorescent detection device including the fluorescent reference member.

The invention can be more fully understood from the following detailed description when taken in conjunction with the accompanying drawings, in which:
FIG. 1 is a block diagram schematically illustrating an exemplary configuration of a fluorescent detection device according to a first embodiment of the present invention.
FIG. 2 is a block diagram schematically illustrating an exemplary configuration of the fluorescent detection device according to the first embodiment of the present invention.
FIG. 3 is a block diagram illustrating the configuration of the fluorescent detection device in more detail.
FIG. 4 is a block diagram illustrating the configuration of the fluorescent detection device in more detail.
FIG. 5 is an illustrative diagram illustrating the configuration of the fluorescent reference member in more detail.
FIG. 6 is an illustrative diagram illustrating the configuration of the fluorescent reference member in more detail.
FIG. 7 is a block diagram schematically illustrating an exemplary configuration of a fluorescent detection device according to a second embodiment of the present invention.
FIG. 8 is a block diagram schematically illustrating the exemplary configuration of the fluorescent detection device according to the second embodiment of the present invention.
FIG. 9 is an exemplary diagram illustrating a luminescent characteristic of the fluorescent reference member and a filter characteristic of a filter shown in FIGS. 7 and 8.

Hereinafter, a fluorescent reference member and a fluorescent detection device comprising the fluorescent reference member according to an embodiment of the present invention will be described in detail with reference to the accompanying drawings.

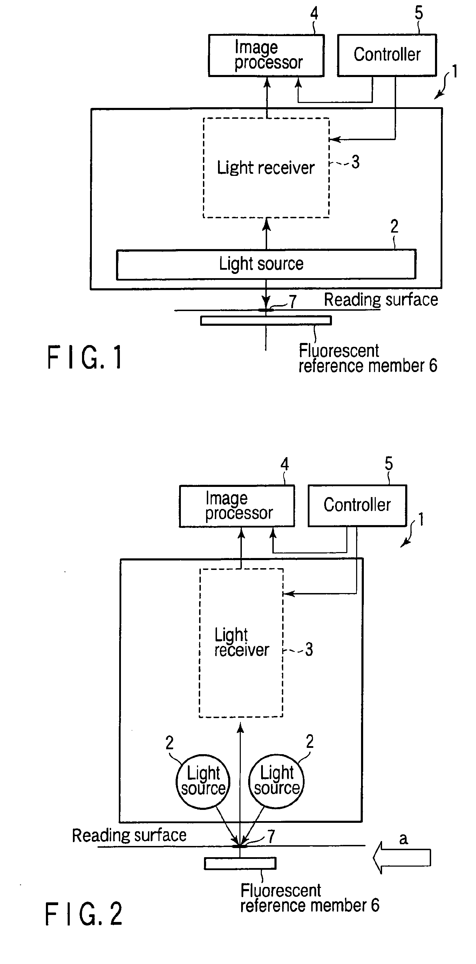

FIGS. 1 and 2 are block diagrams schematically illustrating an exemplary configuration of a fluorescent detection device 1 according to a first embodiment of the present invention. Assume that the fluorescent detection device 1 is included in a sheet processing device which performs operations such as determination of the kind of sheet. The fluorescent detection device 1 is provided in an edge part of a conveyor path through which a sheet to be detected is conveyed.

The sheet processing device can be embodied as a mail processing device which processes mails or an image formation device such as a copier, for example.

A fluorescent ink containing a fluorescent substance (fluorescent material) is printed on some kinds of sheets. The fluorescent material has a characteristic of being excited by light of a specific wavelength and emitting fluorescence. The fluorescent material is excited by ultraviolet radiation, for example. The fluorescence emitted by excitement is determined by the kind (component) of fluorescent material.

The fluorescent detection device 1 irradiates the surface of a sheet with ultraviolet radiation. The fluorescent detection device 1 detects the fluorescence emitted by the fluorescent material after being excited by irradiation of ultraviolet light. The fluorescent detection device 1 determines the kind of sheet based on the detection result of the fluorescence.

FIG. 1 is a view of the fluorescent detection device 1 seen in the direction in which the sheet is conveyed from the front to the back. FIG. 2 is a view of the fluorescent detection device 1 seen in the direction in which the sheet is conveyed from right to left, that is, in the direction of the arrow a.

The fluorescent detection device 1 detects a printing pattern printed on a sheet in a fluorescent ink. As shown in FIG. 1, the fluorescent detection device 1 comprises a light source 2, a light receiver 3, an image processor 4, a controller 5, and a fluorescent reference member 6.

The light source 2 is an illumination device. The light source 2 has a lamp which emits light (such as ultraviolet light) within a luminescent band in which the fluorescent material is excited, such as ultraviolet radiation. The light source 2 irradiates a sheet 7 to be conveyed and the fluorescent reference member 6 with light. A lamp which emits ultraviolet radiation of an approximate wavelength of 365 nm, such as a black light and a UV lamp, is used as the light source 2. The wavelength of the ultraviolet radiation has been described above as 365 nm, but can be changed to any wavelength by which excitement and luminescence can be caused.

As shown in FIGS. 1 and 2, the light source 2 is provided on one side (which is the same as the side on which the light receiver 3 is provided) of the conveyor path. The light source 2 extends in a direction perpendicular to a direction a in which the sheet 7 is conveyed.

The light receiver 3 functions as a light receiving means. The light receiver 3 includes an optical system such as a lens for receiving light and a sensor for converting the light received by the optical system to acquire an image (signal). The optical system images the fluorescence emitted by a conveyor medium containing a fluorescent material. The sensor converts the light imaged by the optical system into an electrical signal and acquires an image.

As shown in FIGS. 1 and 2, the light receiver 3 is provided on one side (which is the same as the side on which the light source 2 is provided) of the conveyor path. More specifically, the side on which the light receiver 3 is provided is a reading surface.

The image processor 4 processes the image acquired by the light receiver 3 and detects a fluorescent image.

The controller 5 comprehensively controls the operations of the light source 2, the light receiver 3, and the image processor 4. The control part 5 has a memory. The memory is formed of a ROM and a RAM, for example. The ROM stores a control program and control data, for example, in advance. The RAM functions as a working memory. The RAM temporarily stores data being processed by the controller 5, for example. The controller 5 identifies a printing pattern printed on a sheet in a fluorescent ink based on the fluorescent image acquired by the light receiver 3.

The fluorescent reference member 6 provides the light receiver 3 with a detection reference. As shown in FIGS. 1 and 2, the fluorescent reference member 6 is provided opposite to the light receiver, interposing the conveyor path in between. The fluorescent reference member 6 contains a fluorescent material. Upon receipt of irradiation of ultraviolet radiation, the fluorescent reference member 6 emits fluorescence to the light receiver 3. The fluorescent reference member 6 will be described in detail below.

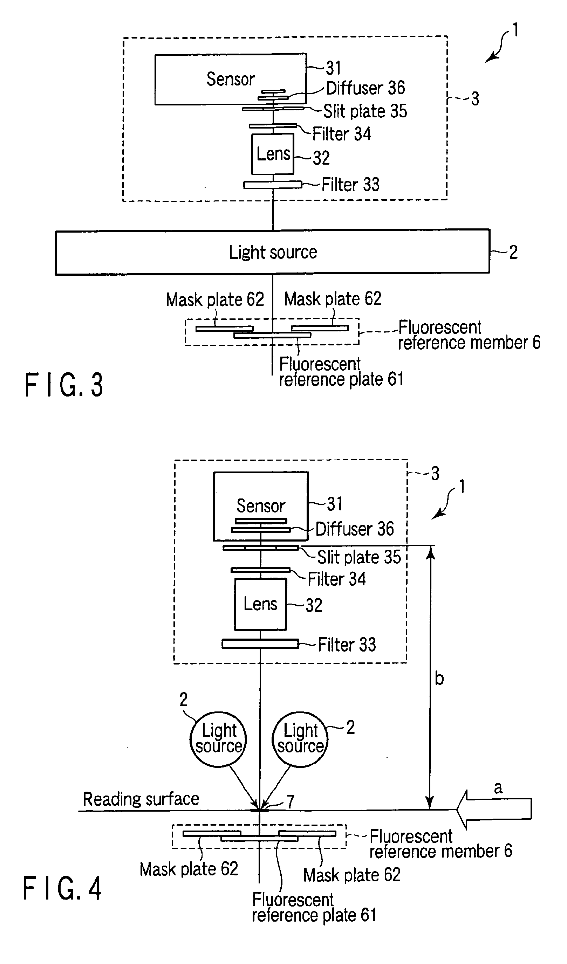

FIGS. 3 and 4 are block diagrams illustrating the configuration of the fluorescent detection device 1 in more detail. FIG. 3 is a block diagram illustrating the configuration of the fluorescent detection device 1 shown in FIG. 1 in more detail. FIG. 4 is a block diagram illustrating the configuration of the fluorescent detection device 1 shown in FIG. 2 in more detail.

As shown in FIGS. 3 and 4, the light receiver 3 includes a sensor 31, a lens 32, a first filter 33, a second filter 34, and a slit 35.

The sensor 31 converts the light imaged by the optical system into an electrical signal to acquire an image. The lens 32 is an optical system. The lens 32 images fluorescence emitted by a medium being conveyed which contains a fluorescent material. The lens 32 receives light from a specific region in the conveyor path through which the medium is conveyed.

The first filter 33 lets only light having wavelengths in a specific band pass through in order to decrease the effect of disturbance light. The second filter 34 removes light of unnecessary wavelengths, such as light which is out of a sensitivity range of the sensor 31, from the light which has passed through the lens 32. The slit plate 35 restricts the amount of light and allows light to be incident on the sensor 31.

The sensor 31 has a diffusion plate (diffuser) 36. The diffusion plate 36 diffuses the light incident on the sensor 31 such that the light is evenly incident on a sensitive surface of the sensor.

The fluorescent reference member 6 has a fluorescent reference plate 61 and a mask plate 62. The fluorescent reference plate 61 is a member containing fluorescence. When the fluorescent reference plate 61 is irradiated with ultraviolet radiation, the fluorescent material is excited and fluorescence is emitted. The mask plate 62 restricts the luminescent intensity of the fluorescent reference plate 61. The mask plate 62 has an opening. The mask plate 62 adjusts an area of the fluorescent reference plate 61 irradiated with the ultraviolet light according to the size of the opening.

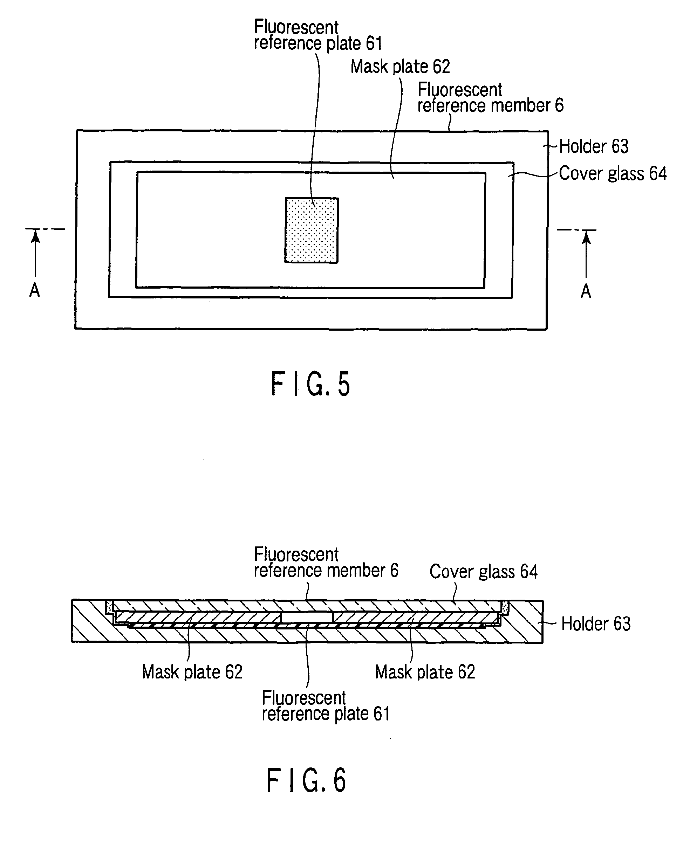

FIGS. 5 and 6 are illustrative drawings illustrating the configuration of the fluorescent reference member 6 in more detail.

FIG. 5 is a view of the fluorescent reference member 6 seen from the side of the light receiver 3. FIG. 6 is a cross-sectional view of the fluorescent reference member 6 shown in FIG. 5, cut along the line AA.

As shown in FIG. 5, the fluorescent reference member 6 includes a fluorescent reference plate 61, a mask plate 62, a holder 63, and an anti-dust glass (cover glass) 64, for example. Further, the fluorescent reference member 6 has an irradiation surface which is irradiated with exciting light (ultraviolet radiation) on the side of the light receiver 3.

The holder 63 is a metal housing formed by processing an opaque metal material such as iron. The holder 63 has a rectangular body having six surfaces. The holder 63 has a concave portion formed in a size capable of containing the fluorescent reference plate 61 and the mask plate 62 on one surface (which is the surface facing the side of the light receiver 3) included in the six surfaces. That is, the concave portion is provided on the irradiation surface. The anti-dust glass 64 is a protective member formed of a material which lets ultraviolet radiation pass through.

The holder 63 contains the fluorescent reference plate 61 and the mask plate 62 such that the fluorescent reference plate 61 and the mask plate 62 are surrounded by the concave portion of the holder 63. Further, as shown in FIG. 6, the fluorescent reference plate 61 and the mask plate 62 are sealed in the concave portion of the holder 63 by the anti-dust glass 64. That is, the fluorescent reference plate 61 and the mask plate 62 are fixed being surrounded by the holder 63 and the anti-dust glass 64. Since the surface of the fluorescent reference member 6 is protected by the anti-glass 64, an operator can wipe off the dust deposited on the surface of the fluorescent reference member 6 at the time of maintenance.

An adhering agent, for example, is introduced to a gap between the anti-dust glass 64 and the holder 63. Thereby, the anti-dust glass 64 prevents dust from entering into the concave portion of the holder 63.

The fluorescent reference member 6 is attached adjacent to the conveyor path by a holder, not shown, for example, in the direction in which the surface on which the anti-dust glass 64 is arranged and the light receiver 3 are opposed to each other.

As described above, the fluorescent reference plate 61 is a member containing fluorescence. The fluorescent reference plate 61 is formed of a mount on the surface of which a fluorescent ink is applied. The mount is a planar object having a thickness of about 300 µm and formed mainly of polypropylene resin, for example. Each of the top surface and the back surface of the planar object has a configuration in which a number of facial cracks (microvoids) are formed, which allows various kinds of printing.

The mount has resistance to water, oil, chemicals, and so forth. Further, the mount has a characteristic that deterioration in quality due to ultraviolet radiation rarely occurs. "Yupo Paper (FGS300)®" by Yupo Corporation, for example, is used as the mount.

A fluorescent ink is applied on at least one of the top surface and the back surface of the mount. The fluorescent ink applied on the mount is white under the normal illumination conditions, but emits fluorescence upon receipt of irradiation of ultraviolet light. The fluorescent ink applied on the mount has a characteristic that deterioration in quality due to ultraviolet rays rarely occurs. A general fluorescent ink emits fluorescence of various wavelengths according to the component forming the fluorescent material contained in the fluorescent ink. In the present embodiment, "Lumilight Yusei Ink®" by Sinroihi Co., Ltd, for example, is used as a fluorescent ink.

The fluorescent reference plate 61 according to an embodiment of the present invention is formed by applying a fluorescent ink containing a mixture of a plurality of fluorescent inks on a mount by means of an applicator, for example. By changing the mixture ratio of the plurality of kinds of fluorescent inks mixed in the fluorescent ink to be applied, the color of fluorescence to be emitted can be changed. By adjusting the mixture ratio of fluorescence inks of three kinds such as red, blue, and green, for example, fluorescence of any wavelengths can be generated.

Thereby, the color of fluorescence emited by the fluorescence ink applied on a sheet and the color of fluorescence emitted by a fluorescent ink applied on the fluorescent reference plate 61 can be adjusted to be nearer to each other.

When the fluorescent ink is applied on a mount, a fixing agent is used to fix the fluorescent ink into the mount. The fluorescent ink and the fixing agent are mixed and applied by the applicator. A 3-mil applicator is used as the applicator. Accordingly, the thickness of the application film is approximately 75 µm. Through sheet absorption and dry hardening, the application film has a final film thickness within the range of 15 to 20 µm.

The dried film thickness is determined by the mixture ratio between the fluorescent ink and the fixing agent. The dried film thickness corresponds to the luminescent intensity of a fluorescent material. The fluorescent intensity of the fluorescent ink can therefore be controlled by the mixture ratio between the fluorescent ink and the fixing agent. When the ratio of the fluorescent ink is set high, that is, when the dried film thickness is great, the luminescent intensity of the fluorescent ink becomes great. When the ratio of the fluorescent ink is set low, that is, when the dried film thickness is small, the luminescent intensity of the fluorescent ink becomes small.

Thereby, the luminescent intensity of fluorescence emitted by a fluorescent ink applied on a sheet and the luminescent intensity of fluorescence emitted by a fluorescent ink applied on the fluorescent reference plate 61 can be made nearer to each other, for example.

In order to fix the fluorescent ink into the mount, however, the ratio of the fixing agent must be higher than a predetermined value. The ratio of the fixing agent required to fix the fluorescent ink into the mount depends on the condition of the surface of the mount on which printing is performed. The luminous intensity can therefore be controlled in a wider range by selecting the mount.

In the present embodiment, "Vini-eight®, Fluorescent S Medium®" by Nagase Screen Printing Research Co., Ltd., for example, is used as the fixing agent. "Vini-eight, Fluorescent S Medium" is a mixture of three kinds of resins, and formed of a meta-acrylic vinyl acetate copolymer mixture. Vini-eight, Fluorescent S Medium uses a high-boiling aromatic hydrocarbon and cyclohexane as a solvent.

The above-described fluorescent ink is applied at least on a surface of the fluorescent reference plate 61 on the side of the light receiver 3.

The mask plate 62 restricts luminescent intensity of the fluorescent reference plate 61. The mask plate 62 is formed of a matte black thin plate. The mask plate 62 restricts the region irradiated with ultraviolet radiation in the surface on which the fluorescent ink of the fluorescent reference plate 61 is applied. That is, the mask plate 62 restricts irradiation of ultraviolet radiation over a region in which the luminescent strength cannot be controlled by the concentration of the fluorescent ink, such as the edge part of the application film.

As shown in FIG. 6, the mask plate 62 is arranged between the fluorescent reference plate 61 and the anti-dust glass 64. As shown in FIGS. 5 and 6, the mask plate 62 has an opening. That is, the fluorescent reference member 6 is configured such that only a region of the application film of the fluorescent reference plate 61 corresponding to the opening of the mask plate 62 is irradiated with ultraviolet radiation.

When the fluorescent reference member 6 with the above-described configuration is irradiated with ultraviolet radiation, fluorescence which is used as a detection reference emitted by the opening of the mask plate 62 of the fluorescent reference member 6 is emitted. The sensor 31 acquires an image from the fluorescence emitted by the opening of the mask plate 62 of the fluorescent reference member 6 and used as the detection reference. The controller 5 compensates for sensitivity of the sensor 31 based on an image of the fluorescence which is a fluorescence reference acquired by the sensor 31. That is, the controller 5 compensates for sensitivity of the sensor 31 such that the fluorescence emitted from an object to be detected falls within a dynamic range of the sensor 31. The controller 5 functions as a compensation means.

Further, the controller 5 detects the medium being conveyed based on the signal acquired from the fluorescence of the medium being conveyed by means of the compensated sensor 31. That is, the controller 5 functions as a detection means which detects the kind of the medium being conveyed.

As described above, the fluorescent reference member according to the first embodiment of the present invention comprises a fluorescent reference plate on which a fluorescent ink which emits fluorescence upon receipt of irradiation of ultraviolet radiation is applied. Since the fluorescence reference member does not use a light absorbing member or an adhering agent which is deteriorated by ultraviolet radiation, the fluorescent reference member always emits fluorescence with stable intensity to the exciting light. Thereby, a fluorescent reference member capable of providing a highly reliable detection reference detection reference and a fluorescent detection device including the fluorescent reference member can be provided.

Further, the fluorescent reference member can emit fluorescence of any wavelengths by adjusting the mixture ratio of the fluorescent inks of at least three kinds such as red, blue, and green, for example. Thereby, a fluorescent reference member which emits fluorescence having a wavelength nearer to that of the fluorescence emitted by an object to be detected can be obtained.

The thickness of the mount has been described above as 300 µm, but any thickness that does not affect the size of the fluorescent reference member 6 can be used. Further, the mount is not limited to "Yupo Paper (FGS300)" by Yupo Corporation formed mainly of polypropylene resin, which has been taken above as an example. Anything on which printing can be performed using a fluorescent ink and which is rarely deteriorated in quality by ultraviolet radiation can be used as the mount.

The fluorescent ink is not limited to "Lumilight Yusei Ink" by Shinroihi as taken above as an example. Any fluorescent ink having a characteristic of emitting fluorescence upon receipt of irradiation of ultraviolet radiation and a characteristic of rarely causing deterioration in quality due to ultraviolet radiation may be used as the fluorescent ink used as the fluorescent reference member according to an embodiment of the present invention.

The second embodiment of the present invention will now be descried.

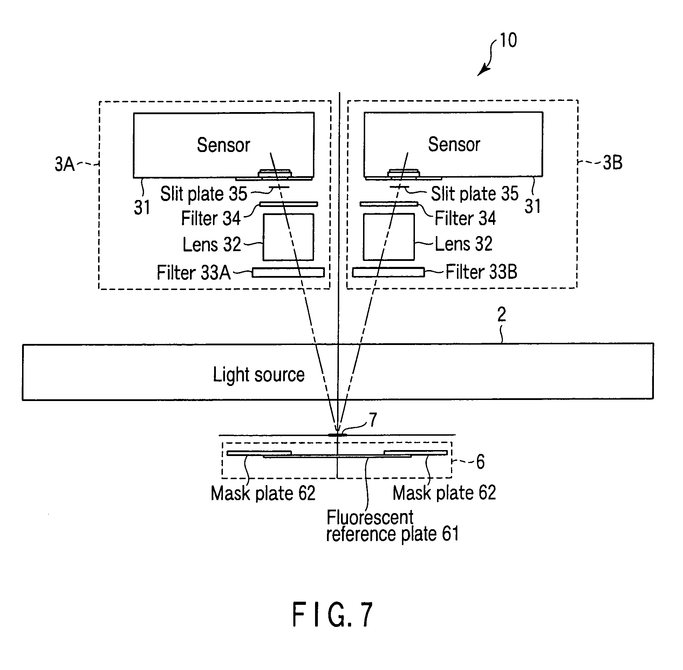

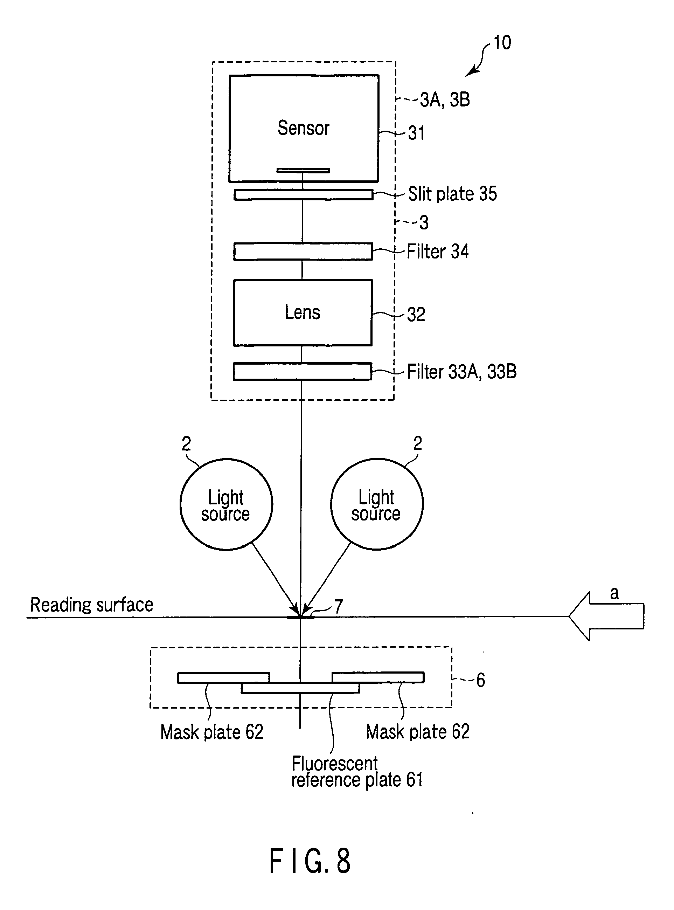

FIGS. 7 and 8 are block diagrams schematically illustrating an exemplary configuration of a fluorescent detection device 10 according to the second embodiment of the present invention. FIG. 7 shows a view of the fluorescent detection device 10 in a direction in which a sheet is conveyed from the front to the back. FIG. 8 is a view of the fluorescent detection device 10 seen in a direction in which a sheet is conveyed from right to left, that is, in the direction of the arrow a.

The fluorescent detection device 10 shown in FIGS. 7 and 8 comprises two light receivers 3A and 3B. The other structural elements are the same as those of the fluorescent detection device 1 shown in FIGS. 1-4, and detailed descriptions of such elements will be omitted.

As shown in FIG. 7, the light receivers 3A and 3B are provided to receive light from the same point. The first filter 33A included in the light receiver 3A and the first filter 33B included in the light receiver 3B have different configurations.

More specifically, the first filter 33A included in the light receiver 3A is a filter which lets only light with blue wavelengths pass through. The first filter 33B included in the light receiver 3B is a filter which lets only light with red wavelengths pass through. Accordingly, different signals are detected by the light receivers 3A and 3B.

The controller 5 of the fluorescent detection device 10 detects difference in level between the signal acquired by the light receiver 3A and the signal acquired by the light receiver 3B to determine the kind of the medium being conveyed. That is, the controller 5 functions as a determination means which determines the kind of the medium being conveyed.

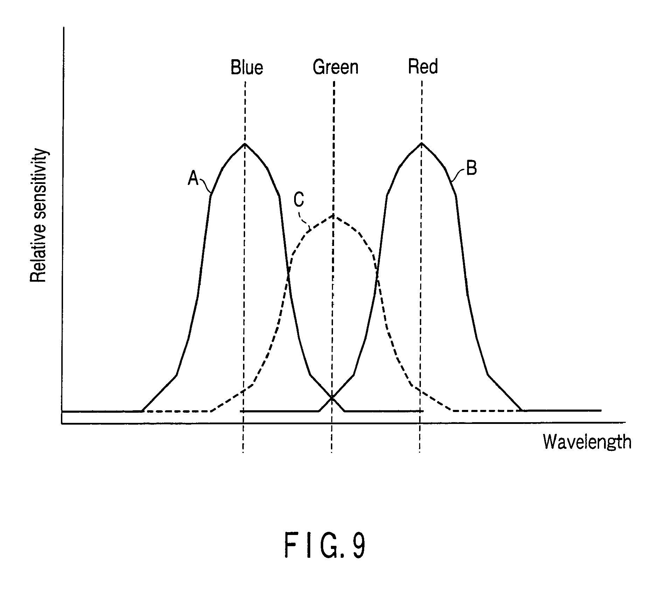

FIG. 9 is an exemplary diagram illustrating a fluorescent characteristic of the fluorescent reference member 6 shown in FIGS. 7 and 8 and a filter characteristic of each of the filters 33A and 33B. Assume that the fluorescent material contained in the medium being conveyed which is to be detected has a dispersion characteristic of emitting fluorescence mainly formed of green. In this case, the fluorescent color of the fluorescent reference member 6 is adjusted to agree with the fluorescent color of the medium being detected. Accordingly, the fluorescent material contained in the fluorescent reference member 6 also has a dispersion characteristic which emits green fluorescence.

In FIG. 9, the graph A illustrates a filter characteristic of the filter 33A. The graph B illustrates a filter characteristic of the filter 33B. The graph C illustrates a luminous characteristic of the fluorescent reference member 6.

As shown in FIG. 9, each of the characteristics is adjusted such that the midpoint between the peak of the filter characteristic of the filter 33A and the peak of the filter characteristic of the filter 33B becomes the peak of the dispersion characteristic of the fluorescent material contained in the medium being conveyed. Accordingly, when green fluorescence is emitted from a normal medium, the level of the signal acquired by the light receiver 3A and the level of the signal acquired by the light receiver 3B agree with each other.

The controller 5 of the fluorescent detection device 10 acquires signals from the light receivers 3A and 3B based on fluorescence emitted by the medium being conveyed. The controller 5 of the fluorescent detection device 10 judges whether the level of the signal acquired from the light receiver 3A and the level of the signal acquired from the light receiver 3B agree.

When it is judged that the level of the signal acquired from the light receiver 3A and the level of the signal acquired from the light receiver 3B disagree, the control part 5 of the fluorescent detection device 10 judges that the medium being conveyed is not a normal medium. That is, the controller 5 judges that a fluorescent material different from an object to be detected is contained in the medium being conveyed.

When it is judged that the level of the signal acquired from the light receiver 3A and the level of the signal acquired from the light receiver 3B disagree, the controller 5 of the fluorescent detection device 10 judges that the medium being conveyed is a normal medium.

Since the fluorescent characteristic of the fluorescent reference member 6 is adjusted to agree with the luminous characteristic of the medium to be detected, as described above, when the medium being conveyed does not exist in a position read by the sensor, fluorescence emitted by the fluorescent reference member 6 is incorporated into the two light receivers 3A and 3B.

The signal acquired from the light receiver 3A and the signal acquired from the light receiver 3B have different wavelengths. The controller 5 compensates for sensitivity of the sensor 31 of the light receiver 3A based on the signal acquired from the light receiver 3A. The controller 5 compensates for sensitivity of the sensor 31 of the light receiver 3B based on the signal acquired from the light receiver 3B.

The size of the opening of the mask plate 62 of the fluorescent reference member 6 is adjusted such that fluorescence from the fluorescent reference plate 61 falls within a dynamic range of each of the sensor 31 of the light receiver 3A and the sensor 31 of the light receiver 3B.

As described above, the fluorescent detection device according to the second embodiment of the present invention determines the kind of medium by determining difference in level between signals received from two optical systems. Thereby, the fluorescent detection device can determine the kind based on the luminous color as well as the luminous intensity. Accordingly, a fluorescent detection device capable of determining the kind with higher reliability can be provided.

Nowadays, a sheet processing device such as a copier and a scanner having the function of distinguishing the kind of sheet exists. Such a sheet processing device is configured to prohibit acquisition of an image from a sheet, upon detection of a sheet of a specific kind. By providing a fluorescent detection device including a fluorescent reference plate according to an embodiment of the present invention, for example, the above-described sheet processing device can determine the kind of sheet with higher precision.

The shape and the luminous level of the fluorescent reference plate according to an embodiment of the present invention can be changed as appropriate. That is, the fluorescent reference plate according to an embodiment of the present invention has broad versatility, and can be applied to various devices.

## Claims

1. A fluorescent reference member (6) **characterized by** comprising a fluorescent reference plate (61), a fluoresecent ink containing a fluorescent material which emits fluorescence upon receipt of irradiation of exciting light being applied on an irradiation surface of the fluorescent reference plate irradiated with the exciting light.

2. The fluorescent reference member according to claim 1, **characterized in that** the fluorescent ink is a mixture of at least three kinds of fluorescent inks containing different fluorescent materials.

3. The fluorescent reference member according to claim 1, **characterized by** further comprising a protective member (64) which is provided on the irradiation surface and lets ultraviolet radiation pass through.

4. The fluorescent reference member according to claim 1, **characterized by** further comprising a mask plate (62) which restricts luminous strength of the fluorescent reference plate.

5. A fluorescent detection (1) device **characterized by** comprising:
a light source (2) which irradiates a medium to be detected with exciting light;
a fluorescent reference member (6) including a fluorescent reference plate, a fluorescent ink containing a fluorescent material which emits fluorescence upon receipt of irradiation of exciting light is applied on an irradiation surface of the fluorescent reference plate irradiated with the exciting light;
a light receive unit (3) configured to receive fluorescence emitted by the fluorescent reference member;
a compensation unit (5) configured to compensate for sensitivity of the light receive unit based on the fluorescence received by the light receive unit; and
a detection unit (5) configured to detect the fluorescence emitted by the fluorescent material contained in the medium to be detected by means of the light receive unit, the sensitivity of the light receive unit having been compensated for by the compensation unit.

6. The fluorescent detection device according to claim 5, **characterized in that** the light receive unit includes:
a first filter (33) which lets only fluorescence emitted by the medium to be detected pass through;
a second filter (34) which interrupts light which has passed through the first filter and is out of a sensor sensitivity of the light receive unit;
a slit (35) which controls an amount of light incident on a sensor of the light receive unit;
a diffusion plate (36) which diffuses light which has passed through the slit such that the light is evenly incident on a sensitivity surface of the sensor of the light receive unit; and
a sensor (31) which converts the received light into an electrical signal.

7. A fluorescent detection device (10) **characterized by** comprising:
a light source (2) which irradiates a medium to be detected with exciting light;
a fluorescent reference member (6) having a fluorescent reference plate, a fluorescent ink containing a fluorescent material which emits fluorescence upon receipt of irradiation of exciting light being applied on an irradiation surface irradiated with the exciting light;
a first light receive unit (3A) configured to receive fluorescence emitted by the fluorescent reference member;
a second light receive unit (3B) configured to receive fluorescence emitted by the fluorescent reference member;
a first compensation unit (5) which compensates for sensitivity of the first light receive unit based on fluorescence received by the first light receive unit;
a second compensation unit (5) configured to compensate for sensitivity of the second light receive unit based on fluorescence received by the second light receive unit; and
a determination unit (5) configured to determine a kind of the medium to be detected based on comparison between the fluorescence detected from the fluorescence contained in the medium to be detected by the first light receive unit and the fluorescence detected from the fluorescent material contained in the medium to be detected by the second light receive unit, sensitivity of the second first receiving means having been compensated for by the first compensation unit, and sensitivity of the second light receive unit having been compensated for by the second compensation unit.

8. The fluorescent detection device according to claim 7, **characterized in that** the first light receive unit includes a first filter (33A) which lets only light in a first wavelength band pass through, the second light receive unit includes a second filter (33B) which lets only light in a second wavelength band pass through, and a peak wavelength of the light in the first wavelength band and a peak wavelength of the light in the second wavelength band are wavelengths which are peak wavelengths emitted by the fluorescent material contained in the medium to be detected.

9. The fluorescent detection device according to claim 7, **characterized in that** the fluorescent reference member further includes a mask plate which restricts luminous strength of the fluorescent reference plate such that both of the fluorescence from the medium to be detected and the fluorescence from the fluorescent reference plate fall within a dynamic range of a sensor of each of the first and the second light receive unit.
